**Europäisches Patentamt**

(19) **European Patent Office**

**Office européen des brevets**

(11) Numéro de publication: **0 136 208**
**B1**

(12) **FASCICULE DE BREVET EUROPEEN**

(45) Date de publication du fascicule du brevet: **18.01.89**

(21) Numéro de dépôt: **84401617.0**

(22) Date de dépôt: **02.08.84**

(51) Int. Cl.⁴: **B 60 J 1/00,** B 60 J 3/00, C 03 C 17/23

(54) Vitrage à basse émissivité pour véhicules automobiles.

(30) Priorité: **04.08.83 FR 8312843**

(43) Date de publication de la demande:
**03.04.85 Bulletin 85/14**

(45) Mention de la délivrance du brevet:
**18.01.89 Bulletin 89/03**

(84) Etats contractants désignés:
**AT BE CH DE FR GB IT LI LU NL SE**

(56) Documents cités:
EP-A-0 039 256
BE-A- 507 825
FR-A-2 293 405
FR-A-2 399 331
FR-E- 70 004
GB-A-1 524 650

THIN SOLID FILMS, vol. 102, no. 1, Avril 1983,
pages 1-46, Elsevier Sequoia, NL; K.L. CHOPRA
et al.: "Transparent conductors - a status
review"

(73) Titulaire: **SAINT-GOBAIN VITRAGE**
**Les Miroirs 18, avenue d'Alsace**
**F-92400 Courbevoie (FR)**

(72) Inventeur: **Colmon, Daniel**
**6 place du Colonel Fabien**
**F-60150 Thourotte (FR)**
Inventeur: **Letemps, Bernard**
**5 avenue du Gros Buisson**
**F-60150 Thourotte (FR)**
Inventeur: **Delpeyroux, Jean-Pierre**
**20 avenue du Président Kennedy**
**F-72230 Le Pecq (FR)**
Inventeur: **Fremeaux, Jacques**
**1 bis rue Claude Monet**
**F-78380 Bougival (FR)**

(74) Mandataire: **Leconte, Jean-Gérard et al**
**Saint-Gobain Recherche 39, Quai Lucien Lefranc**
**F-93304 Aubervilliers Cedex (FR)**

EP 0 136 208 B1

## Description

L'invention concerne un véhicule automobile équipé de vitrages, présentant une émissivité abaissée en vue d'améliorer le confort physiologique des passagers notamment par temps froid.

Des vitrages de ce type sont décrits dans la publication française de brevet 2 399 331. Ces vitrages connus portent sur leur face extérieure un revêtement d'oxyde métallique transmettant la lumière, qui accroît le taux de réflexion des vitrages dans l'infra-rouge (I.R.), ce revêtement présentant une résistivité inférieure à 50 ohms par carré.

Il apparaît que de tels vitrages ainsi revêtus sur leur face extérieure sont sensibles à l'usure, notamment sous l'action des essuie-glaces lorsqu'ils sont utilisés en tant que pare-brise d'automobile, ce qui peut entraîner l'apparition d'irrisations colorées dues aux dégradations d'épaisseur du revêtement dans les zones d'usure, qu'ils ne favorisent pas la disparition de la buée de façon aussi rapide qu'il est possible, que leurs caractéristiques énergétiques sont défavorablement influencées en cas de pluie par la présence d'une pellicule d'eau en recouvrement du revêtement extérieur, qu'ils ne procurent pas un confort physiologique satisfaisant par temps froid pour les passagers du véhicule sur lequel ils sont installés, bien qu'ils aient tendance grâce à leur revêtement à constituer des parois à température plus élevée que d'autres vitrages non revêtus.

Le document FR—E—70004 propose un vitrage présentant un revêtement électriquement conducteur, disposé éventuellement du côté destiné à être placé à l'intérieur d'un véhicule, mais sur une partie seulement de la surface de l'ordre de la moitié de la surface totale, dont l'épaisseur varie d'un endroit à l'autre, depuis une épaisseur pour laquelle ledit revêtement est sensiblement opaque, jusqu'à une épaisseur nulle. De tels revêtements de vitrage risquent de ne pas satisfaire les nouveaux règlements relatifs aux vitrages pour automobiles, notamment le règlement n° 43 entré en vigueur en 1981 faisant partie de l'accord des Nations Unies "concernant l'adoption de conditions uniformes d'homologation et la reconnaissance réciproque de l'homologation des équipements et pièces de véhicules à moteur", ils risquent donc de ne pas convenir comme vitrages pour l'automobile et surtout comme parebrise, du fait de l'insuffisance de transmission lumineuse qu'ils peuvent posséder dans certaines zones. Par ailleurs ils peuvent présenter des variations de couleur consécutives aux variations d'épaisseur et ils seront en outre inefficaces sur le plan confort physiologique du fait qu'ils ne recouvrent qu'au maximum environ la moitié des vitrages.

Le document GB—A—1 524 650 propose lui-aussi des vitrages revêtus sur une ou deux faces de couches ayant des épaisseurs, déduites des résistivités électriques annoncées, qui seraient incompatibles avec l'application pour l'automobile envisagée dans la présente demande, mais qui sont tout à fait adaptées avec l'application en tant que porte pour four prévue dans ce document GB—A—1 524 650.

Le document FR—A—2 293 405 propose quant à lui des vitrages revêtus de couches chauffantes pour l'aviation mais ces couches ont des épaisseurs qui varient tellement qu'il en résulte nécessairement des variations de couleurs qui sont inacceptables dans l'automobile.

Le document EP—A—0 039 256 propose des couches pouvant revêtir des vitrages destinés à la construction, ces couches pouvant prendre n'importe quelle position sur un vitrage et leur épaisseur n'étant pas indiquée.

En conséquence, la présente invention vise à fournir un véhicule automobile équipé de vitrages qui ne présentent pas les inconvénients des vitrages connus et qui procurent des améliorations sur le plan confort physiologique des passagers embarqués dans lesdits véhicules automobiles.

Ces vitrages sont tels qu'ils restent inchangés lorsqu'ils sont soumis sur leur face extérieure, donc la plus exposée, à des usures du type frottement de balais d'essuie-glaces, qu'ils accroissent par rapport aux vitrages connus, la vitesse de disparition de la buée, que leurs caractéristiques énergétiques soient inchangées en cas de pluie, qu'ils entraînent par temps froid, pour les passagers de l'habitacle sur lequel ils sont montés, une dépense énergétique moindre conduisant à un meilleur confort physiologique bien que présentant une température de surface inférieure à celle du vitrage présenté dans le document antérieur FR 2 399 331 déjà cité.

Le véhicule automobile selon l'invention, équipé de vitrages répondant à la réglementation en matière de vitrages automobiles, à savoir ayant un coefficient de transmission lumineuse d'au moins 0,70, munis sur toute leur surface d'un revêtement transparent et de basse émissivité à base d'oxydes métalliques est tel que ce revêtement sur les vitrages est disposé du côté de l'intérieur du véhicule, qu'il possède une épaisseur inférieure ou égale à 3000 Angstroems (300nm), une émissivité inférieure ou égale à 0,4 en vue, notamment par temps froid, de réduire les dépenses énergétiques des passagers embarqués et d'améliorer leur confort physiologique.

Avantageusement, pour ne pas altérer de façon substantielle la transmission lumineuse et lui permettre de satisfaire aux normes en matière de vitrages pour automobiles, le revêtement lorsqu'il est à base d'oxyde d'étain dopé au fluor a une épaisseur faible, avantageusement de l'ordre de 2400 (240nm) ou même 1650 Angstroems (165nm) et une émissivité avantageusement de 0,3 ou même 0,25.

De préférence, toujours pour conserver une transmission lumineuse importante, la plaque notamment en verre, qui supporte le revêtement, possède à elle seule un coefficient de transmission lumineuse au moins égal à 0,80 et de préférence de l'ordre de 0,90.

L'invention sera maintenant décrite plus en détail en référence aux figures jointes qui représentent:

Figure 1: un pare-brise d'automobile selon l'invention,

Figure 2: un pare-brise selon l'art antérieur,

Figure 3: un pare-brise selon l'invention équipé de collecteurs d'alimentation électrique.

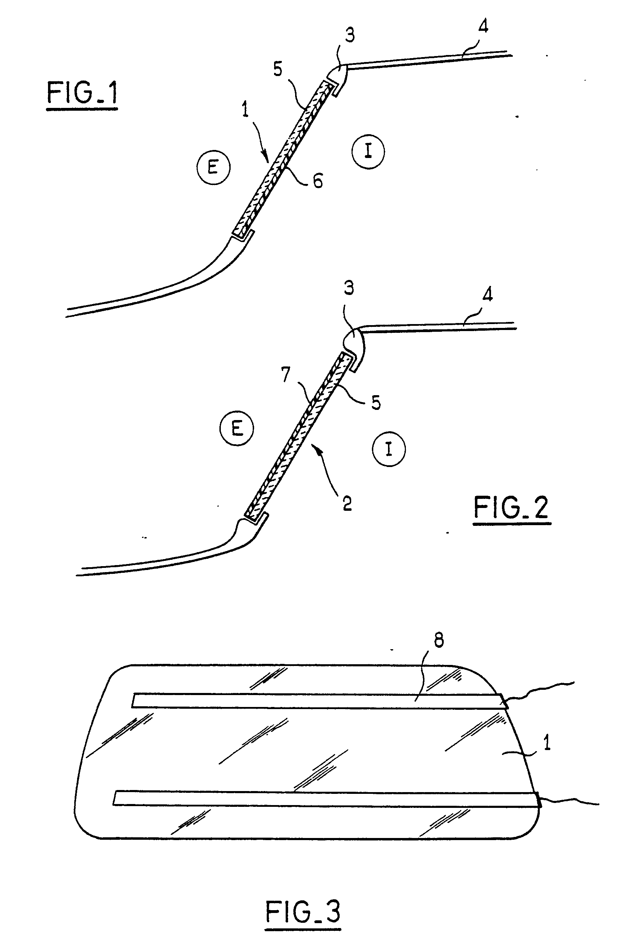

Selon les figures 1 et 2, un vitrage 1 ou 2 est monté dans un cadre 3 appartenant à une carrosserie 4 de véhicule automobile, l'intérieur du véhicule étant désigné par la lettre "I" alors que l'extérieur est désigné par la lettre "E".

Selon la figure 1, le vitrage 1 obtenu à partir d'une plaque 5, notamment en verre, porte sur sa face interne dirigée vers l'interieur du véhicule, un revêtement 6 d'oxyde métallique, de basse émissivité, qui augmente le taux de réflexion du vitrage 1 vis à vis du rayonnement infra-rouge.

Selon la figure 2, le vitrage 2 obtenu à partir d'une même plaque 5, porte un revêtement 7 du même type que précédemment, mais sur sa face externe dirigée vers l'extérieur du véhicule.

Ces revêtements 6 et 7 sont à base d'oxyde de Fe, Co, Cr, Ti, Al, Sn, Cu, In, etc . . .

De tels revêtements 6 ou 7 ont des effets bénéfiques sur les échanges énergétiques entre l'extérieur et l'intérieur du véhicule; en hiver les déperditions calorifiques de l'habitacle du véhicule sont réduites, tandis qu'en été les apports calorifiques de l'extérieur sont également réduits et cette amélioration vis-à-vis de véhicules équipés de vitrages non traités est d'autant plus sensible que l'émissivité du revêtement 6 ou 7 est plus basse.

On constate que lorsque la température extérieure est basse et de l'ordre de 0°C et que l'on maintient à l'intérieur du véhicule une température constante de 20°C, la température d'un vitrage 1 revêtu d'une couche intérieure 6, est en face interne (cas de fig. 1), de l'ordre de 6°C tandis que la température d'un vitrage 2 revêtu d'une couche extérieure 7 est, en face interne (cas de fig. 2) de l'ordre de 14°C.

Compte tenu de ce que la température de paroi est plus faible dans le cas illustré par la figure 1 que dans le cas illustré par la figure 2, on s'attendrait à ce que le confort physiologique d'un passager soit meilleur dans le véhicule équipé comme montré sur la fig. 2, c'est à dire dans le cas où la température de paroi est la plus élevée.

Or, on constate le contraire. Si les couches 6 et 7 ont chacune une émissivité égale à 0,4 et si le passager est considéré comme rayonnant de façon identique au corps noir à environ 30°C, ledit passager dépensera environ 9 Watts par $m^2$ dans le cas illustré par la figure 2 c'est à dire celui où la couche 7 est extérieure, mais seulement environ 5 Watts par $m^2$ dans le cas illustré par la figure 1, c'est à dire celui où la couche 6 est intérieure.

Il en résulte un intérêt à disposer de telles couches à basse émissivité du côté de l'intérieur des habitacles de véhicules automobiles.

L'intérêt de tels vitrages revêtus intérieurement d'une couche à basse émissivité est particulièrement important pour des véhicules de transport en commun, du type bus, wagons dans lesquels les surfaces vitrées sont très importantes et dans lesquels les passagers sont à proximité immédiate desdites surfaces.

Pour l'effet décrit, des émissivités de l'ordre de 0,4 conviennnent, à fortiori des émissivités inférieures.

De telles couches 6 ainsi disposées vers l'intérieur ne sont pas soumises à des usures résultant de rayures accidentelles, du frottement des balais d'essuie-glace dans le cas de vitrages de véhicules, ou des intempéries; elles ne laisseront donc jamais apparaître d'irrisations colorées résultant de dégradations d'épaisseur.

En outre, de telles couches intérieures, en particulier des couches de relativement faible émissivité, au maximum de l'ordre de 0,15, ayant une résistivité par carré au maximum de l'ordre de 16 Ohms, pourront être alimentées électriquement pour constituer des couches chauffantes.

L'alimentation électrique se fera de préférence par des bandes collectrices 8 disposées comme montrées en fig. 3 dans le sens de la longueur des vitrages, réservant ainsi entre lesdites bandes 8, une résistance relativement faible, plus faible que si elles étaient disposées dans l'autre sens comme habituellement.

Des couches d'émissivité plus importantes de l'ordre de 0,4 pourront également constituer des couches chauffantes à condition d'être alimentées sous des tensions supérieures aux tensions de 12 Volts délivrées par les batteries automobiles habituelles.

Une telle couche 6 disposée intérieurement, alimentée électriquement, ne sera pas sensible aux dégradations, ni aux courtscircuits avec la carrosserie du fait par exemple de la pluie.

Une telle couche 6 pourra être une couche obtenue par pyrolyse d'un composé organométallique, déposé sur une plaque en verre 5 par pulvérisation d'une poudre en suspension dans un gaz porteur, par exemple de l'air.

Des moyens et des procédés pour obtenir un tel revêtement à l'aide d'une poudre sont, par exemple, décrits dans la publication française de brevet n° 2 427 141 ou dans les demandes de brevets déposées en France sous les n° 2 542 636 et 2 542 637. Selon ces demandes antérieures, on utilise pour distribuer une poudre d'un composé organométallique sur un substrat en verre, une buse disposée approximativement verticale au dessus du substrat qui défile sous elle, ladite buse comportant une ouverture qui la traverse de part en part pour se terminer à son extrémité proche du substrat par une fente de distribution longitudinale, cette ouverture ayant au moins une zone d'accélération immédiatement en amont de la fente de distribution, constamment convergente, formée de deux parois en regard l'une de l'autre, faiblement espacées, délimitant un espace en forme de lame recevant de la poudre à son entrée, recevant également à cette entrée et sur ses flancs, le long de ses parois, un gaz d'accélération à grande vitesse dirigé vers la fente de distribution.

Grâce à une telle buse, on forme à l'aplomb du substrat à revêtir une veine de poudre en suspension dans un gaz, généralement de l'air, en forme de lame s'étendant au moins sur la largeur du substrat à revêtir défilant dans la direction de sa longueur sous la buse, on maintient ladite veine en écoulement continu en direction du substrat, on y introduit des courants gazeux pour y créer des turbulences et ainsi homogénéiser le mélange de gaz et de poudre au fur et à mesure qu'il progresse vers le substrat, et on accélère régulièrement le mouvement de la poudre vers le substrat en l'entraînant par des courants gazeux additionnels à grande vitesse introduits sur ses flancs.

Une telle buse est par exemple alimentée à sa partie supérieure par des tubes délivrant un prémélange de poudre et de gaz, lesdits tubes étant répartis sur toute la longueur de la lame.

On peut ainsi distribuer des poudres métalliques par exemple des composés d'étain tels de l'oxyde de dibutyl étain, du difluorure de dibutyl étain (DBTF) des acétyl acétonates métalliques divers . . .

On obtient ainsi par exemple avec une poudre de DBTF déposée sur un substrat en verre de 4 mm d'épaisseur une couche de $SnO_2$ dopée au fluor, d'épaisseur comprise entre 1634 et 1650 angströms, d'émissivité 0,3 à 393°K, présentant un coefficient de transmission lumineuse de 0,83.

Avec la même poudre de DBTF, on peut également obtenir une couche par exemple de 2400 à 2450 Angströms d'épaisseur d'émissivité 0,25 à 393°K, présentant un coefficient de transmission lumineuse de 0,76.

Une telle couche 6 pourra être obtenue également par pulvérisation de composés organométalliques en solution, par dépôt de ces composés à l'état de vapeur, par des techniques de dépôts sous vide.

L'épaisseur et la nature de ces couches peuvent varier en particulier pour satisfaire les contraintes de transmission lumineuse imposées par les règlementations, lorsqu'il s'agira de vitrages pour automobiles.

En général, pour respecter ces contraintes, les épaisseurs seront inférieures à 3000 Angströms.

Pour permettre l'utilisation en tant que vitrages d'automobiles, de ces vitrages 1 munis d'un revêtement 6 sur leur face destinée à être dirigée vers l'intérieur, les plaques 5, notamment en verre, qui constituent le support de revêtement 6, présentent, prises seules, un coefficient de transmission lumineuse important, avantageusement au moins égal à 0,80 et de préférence de l'ordre de 0,90. Le vitrage 1, une fois revêtu, pourra alors avoir un coefficient de transmission au moins égal aux 0,70 et même 0,75 prescrits par les règlementations en matière de vitrages automobiles.

Ainsi on peut utiliser en tant que plaque 5, une plaque de verre clair dit verre "Planilux" ayant pour des épaisseurs de 3 ou 4 mm, un coefficient de transmission lumineuse au moins égal à 0,90.

Bien entendu, l'effet bénéfique de telles couches sur la face intérieure des vitrages pourra être combiné avec d'autres effets obtenus par d'autres traitements des vitrages.

Ainsi les vitrages revêtus intérieurement pourront en outre être revêtus extérieurement.

De telles couches peuvent être déposées sur la face intérieure de vitrages, non seulement constitués de glace claire du type dit "Planilux", mais également de verre teinté dans la masse à facteur énergétique de transmission abaissé.

Ainsi, on peut utiliser comme substrat du verre dit "T.F.A." c'est à dire coloré dans sa masse par du sélénium et des oxydes de fer, cobalt, nickel et/ ou chrome comme décrit dans les publications françaises de brevet 2 293 328 et 2 330 556.

On peut utiliser du verre dit "T.S.A." présentant en 4 mm d'épaisseur, un coefficient de transmission lumineuse de 0,79 et un facteur énergétique de transmission de l'ordre de 0,50.

"T.S.A" est un verre coloré dans sa masse par des oxydes de fer et de cobalt et éventuellement par du sélénium, la quantité d'oxyde de fer étant supérieure à celle du "T.F.A." et au contraire, la quantité d'oxyde de cobalt et de sélénium étant inférieure à celle du "T.F.A.".

Ainsi ces vitrages ajouteront à leurs propriétés dues à leur coloration dans leur masse ou à leur couche extérieure des propriétés supplémentaires dues à la couche intérieure. Cependant bien souvent de tels vitrages doublement revêtus, ou à la fois revêtus et teintés ne présenteront pas une transmission lumineuse suffisante pour être utilisés en tant que pare-brise, vitrages latéraux ou lunette arrière de véhicules automobiles. Ils pourront cependant être utilisés autrement, notamment dans l'habitat ou comme toits panoramiques de véhicules automobiles.

## Revendications

1. Véhicule automobile équipé de vitrages répondant à la réglementation en matière de vitrages automobiles, à savoir ayant un coefficient de transmission lumineuse d'au moins 0,70, ces vitrages étant munis sur toute leur surface d'un revêtement transparent et de basse émissivité, à base d'oxydes métalliques, caractérisé en ce que ce revêtement sur les vitrages est disposé du côté de l'intérieur du véhicule, en ce qu'il possède une épaisseur inférieure ou égale à 3000 Angstroems (300nm), en ce que son émissivité est inférieure ou égale à 0,4, en vue, notamment par temps froid, de réduire les dépenses énergétiques des passagers embarqués et d'améliorer leur confort physiologique.

2. Véhicule selon la revendication 1, caractérisé en ce que les revêtements de ces vitrages sont des oxydes métalliques appartenant au groupe des oxydes de Fe, Cr, Co, Ti, Al, Sn, Cu, In.

3. Véhicule selon l'une des revendications précédentes, caractérisé en ce que le revêtement est de l'oxyde d'étain dopé au fluor, d'émissivité avantageusement de 0,3 ou même 0,25 et d'épaisseur avantageusement de l'ordre de 2400 (240nm) ou même de l'ordre de 1650 Angstroems (165 nm).

4. Véhicule selon l'une des revendications 1, 2 ou 3, caractérisé en ce que les vitrages comportent une plaque porteuse du revêtement, cette plaque seule ayant un coefficient de transmission lumineuse d'au moins 0,80, et étant notamment en verre ou en verre teinté dans sa masse du type " TFA" ou " TSA".

## Patentansprüche

1. Kraftfahrzeug, welches mit vorschriftsgemäßen Scheiben ausgerüstet ist, nämlich die einen Lichtdurchlässigkeitskoeffizienten von mindestens 0,70 aufweisen, wobei die Scheiben auf ihrer gesamten Oberfläche mit einem transparenten Überzug mit geringem Emissionsvermögen auf der Grundlage von Metalloxiden versehen sind, dadurch gekennzeichnet, daß der Überzug auf den Scheiben auf der Innenseite des Farzeugs vorgesehen ist, eine Dicke kleiner oder gleich 3000 Angström (300nm) besitzt und daß sein Emissionsvermögen kleiner oder gleich 0,4 mit Hinsicht darauf beträgt, das insbesondere bei kaltem Wetter der Energieverbrauch der im Fahrzeug befindlichen Passagiere vermindert und deren Komfort in physiologischer Hinsicht verbessert wird.

2. Fahrzeug nach Anspruch 1, dadurch gekennzeichnet, daß die Überzüge der Scheiben aus Metalloxiden aus der Gruppe von Oxiden aus Fe, Cr, Co, Ti, Al, Sn, Cu, In gebildet sind.

3. Fahrzeug nach einem der vorhergehenden Ansprüche, dadurch gekennzeichnet, daß der Überzug aus mit Fluor dotiertem Zinnoxid gebildet ist, ein Emissionsvermögen vorteilhafterweise von 0,3 oder gar von 0,25 und eine Dicke vorteilhafterweise in der Größenordnung von 2400 Angström (240nm) oder der in der Größenordnung von 1650 Angström (165nm) aufweist.

4. Fahrzeug nach einem der Ansprüche 1, 2 oder 3, dadurch gekennzeichnet, daß die Scheiben eine Trägerplatte für den Überzug aufweisen, die einen Lichtundurchlässigkeitskoeffizienten von mindestens 0,80 aufweist und insbesondere aus Glas oder aus in seiner Masse gefärbtem Glas der Art von " TFA" oder " TSA" besteht.

## Claims

1. Car having windows in accordance with the regulation concerning car windows, namely having a light transmission coefficient of at least 0.70, said windows being provided over their entire surface with a low emissivity, transparent coating based on metal oxides characterized in that the coating on the windows is on the inside of the vehicle, in that it has a thickness equal to or less than 3000 Angstroems (300nm) and that its emissivity is equal to or below 0.4, so that, particularly during cold weather, energy costs and the physiological comfort of persons travelling in the vehicle are favourably influenced.

2. Car according to claim 1, characterized in that the coatings of said windows are of metal oxides belonging to the group of oxides of Fe, Cr, Co, Ti, Al, Sn, Cu, In.

3. Car according to one of the preceeding claims, characterized in that the coating is of fluorine-doped tin oxide, with an emissivity of advantageously 0.3 or even 0.25 and a thickness of advantageously approximately 2400 Angstroems (240nm) or even approximately 1650 Angstroems (165nm).

4. Car according to one of the claims 1, 2, or 3, characterized in that the windows have a coating-carrying plate, which alone has a light transmission coefficient of at least 0.80 and in particular of glass or glass tinted in its mass of the TFA or TSA type.

EP 0 136 208 B1

FIG.1

FIG.2

FIG.3

1